## Europäisches Patentamt
## European Patent Office
## Office européen des brevets

(19)

(11) Veröffentlichungsnummer: **0 084 646**
**B1**

(12) **EUROPÄISCHE PATENTSCHRIFT**

(45) Veröffentlichungstag der Patentschrift:
**12.03.86**

(21) Anmeldenummer: **82111552.4**

(22) Anmeldetag: **13.12.82**

(51) Int. Cl.⁴: **B 23 D 36/00**, G 01 B 11/04,
**B 21 B 37/00**

(54) Verfahren zum Schopfen des Kopfes von selbstleuchtendem Walzgut, insbes. Metallbändern, und Vorrichtung zur Durchführung des Verfahrens.

(30) Priorität: **24.12.81 DE 3151384**

(43) Veröffentlichungstag der Anmeldung:
**03.08.83 Patentblatt 83/31**

(45) Bekanntmachung des Hinweises auf die Patenterteilung:
**12.03.86 Patentblatt 86/11**

(84) Benannte Vertragsstaaten:
**AT BE DE FR GB IT**

(73) Patentinhaber: **Thyssen Aktiengesellschaft vorm. August Thyssen-Hütte, Kaiser-Wilhelm-Strasse 100, D-4100 Duisburg (DE)**

(72) Erfinder: **Reizig, Hans-Jürgen, Heuberg 15, D-4100 Duisburg 18 (DE)**
Erfinder: **Meuters, Friedrich, Compesmühlenweg 81, D-4050 Mönchengladbach (DE)**
Erfinder: **Louen, Hans-Richard, Am Birkenhain 16, D-4222 Friedrichsfeld (DE)**

(74) Vertreter: **Patentanwaltsbüro Cohausz & Florack, Postfach 14 01 47, D-4000 Düsseldorf 1 (DE)**

(56) Entgegenhaltungen:
DE - A - 2 011 276
DE - A - 2 040 084
DE - A - 2 112 158
DE - A - 2 140 939
DE - A - 2 516 756
DE - B - 2 920 531
US - A - 3 033 991
US - A - 3 386 321

Patent Abstracts of Japan Band 4, Nr. 171, 26. November 1980
Patent Abstracts of Japan Band 3, Nr. 35, 24. März 1979 Seite 163M53
Patent Abstracts of Japan Band 1, nr. 154, 9. Dezember 1977 Seite 5593M77
STAHL UND EISEN, Band 97, Nr. 19, 22. September

(56) Entgegenhaltungen: (Fortsetzung)
1977, Düsseldorf P. BOHLÄNDER "Bestimmung der Lage, Grösse und Temperaturverteilung von heissem Walzgut mit selbstabtastenden Fotodiodenzeilen" Seiten 927-932

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zum Schopfen des Kopfes von selbstleuchtendem Walzgut, bei dem die Kopfform unmittelbar hinter dem letzten Vorwalzgerüst mittels einer Kamera erfasst wird und in Abhängigkeit von der Kopfform die Entfernung der Schnittlinie vom Kopfanfang bestimmt wird, und bei dem unmittelbar vor der Schere der Kopfanfang erfasst wird und aus der Entfernung des Abstandes der Schnittlinie vom Kopfanfang, der Durchlaufgeschwindigkeit des Walzgutes vor der Schere und dem Signal für den ankommenden Kopfanfang ein an die Schere zu übertragendes Steuersignal gebildet wird.

Beim Walzen von Breitband wird aus einer Bramme zunächst, z.B. in einem Reversiergerüst, ein Vorband erzeugt. Vor der Weiterverarbeitung dieses Vorbandes ist es erforderlich, die Kopfbreite des Bandes zu bestimmen, weil nicht selten der Kopf beim Vorwalzen verbreitert worden ist und die Anstichbreite im Fertiggerüst übersteigt. Um die Weiterverarbeitung eines solchen Vorbandes zu ermöglichen, muss der verbreiterte Kopf vom übrigen Walzgut abgetrennt (geschopft) werden.

Auch ein unsymmetrisch geformter Kopf kann zu Schwierigkeiten bei der Weiterverarbeitung führen. So kann es beispielsweise zu einem Verkanten des Bandes während des Anstichs im ersten Fertiggerüst kommen. Falls der Kopf des Vorbandes erheblich verjüngt ist, ergibt sich während des Walzens im Fertiggerüst ein Band, das im Anfangsbereich der Sollbreite nicht entspricht. Auch aus diesen Gründen ist der Walzwerker daran interessiert, den nicht zu verwertenden Kopfteil vor der Fertigwalzung abzuschneiden.

In beiden Fällen soll jedoch der abzuschneidende, als Kopfschrott anfallende Teil so klein wie möglich gehalten werden.

Um nicht zu viel, aber auch nicht zu wenig vom Kopf abzuschneiden, ist es erforderlich, die Breite und die Kopfform des Walzgutes zu ermitteln. Üblicherweise geschieht dies mit berührungslos arbeitenden Messgeräten.

Verfahren zur berührungslosen Dimensionsmessung von Walzgut sind dem Fachmann bereits bekannt. Bei einem in der Praxis verwendeten Verfahren wird Walzgut mit einer unterhalb des Rollganges angeordneten Lichtquelle für paralleles Licht hinterleuchtet und das Walzgut durch die Optik einer bekannten Diodenzeilenkamera auf deren Dioden abgebildet (DE-A-2 140 939). Bei einer für die Durchführung dieses Verfahrens geeigneten Kamera werden die Dioden von der einfallenden Strahlung aufgeladen. Der Ladezustand der Dioden wird überprüft, wobei die Dioden entladen werden, so dass sie für eine neue Aufladung wieder zur Verfügung stehen. Nach einer vorgebbaren Ladezeit erfolgt eine erneute Überprüfung des Ladezustandes. Die Frequenz, mit der die Dioden bezüglich ihrer Ladung überprüft werden, heisst «Abtastfrequenz».

Bei diesem bekannten Verfahren zur berührungslosen Dimensionsmessung von Walzgut ist jedoch von Nachteil, dass die Beleuchtungslampen unterhalb des Walzgutes zwischen den Rollen des Rollganges angeordnet werden müssen. Abgesehen nämlich davon, dass die Lampen einer erheblichen Wärmestrahlung ausgesetzt sind, kann auch eine Beschädigung und Verschmutzung der Lampen durch vom Walzgut abfallenden Zunder nicht verhindert werden.

Um diese Nachteile zu vermeiden, ist auch bereits vorgeschlagen worden, die Eigenstrahlung des Walzgutes für die Breitenmessung auszunutzen. In einem modernen Walzwerk werden Stähle unterschiedlicher Qualität zu Bändern verarbeitet. Da unterschiedliche Qualitäten mit unterschiedlichen Walztemperaturen gewalzt werden müssen, ergeben sich recht unterschiedliche Eigenstrahlungsintensitäten des Walzgutes. Um optimale Breitenmessungen durchführen zu können, muss die Belichtungseinstellung der Diodenzeilenkamera auf die Strahlung des jeweils durchlaufenden Walzgutes eingestellt werden. Zusätzliche Schwierigkeiten ergeben sich dadurch, dass die Strahlungsintensität des zu messenden Walzgutes von dessen Mitte zu den Kanten hin erheblich abnehmen kann, so dass die an den Bandkanten herrschenden Helligkeitskontraste häufig nicht ausreichen, um zu einer sicheren Aussage darüber zu gelangen, ob eine Fotodiode des Kantenbereiches belichtet wird oder nicht.

Zur einwandfreien Auffindung der Kanten des Walzgutes ist ein Verfahren zum Messen der Breite von selbstleuchtendem Walzgut bekannt (DE-A-2 516 756), das mit einer Diodenzeilenkamera durchgeführt wird. Bei diesem Verfahren wird die Strahlungsintensität mittels der Dioden der Diodenzeilenkamera gemessen und diese Messwerte für die Verarbeitung in einer Regeleinrichtung aufbereitet, wobei die hellste Stelle als Istwert für den Regelkreis verwendet wird. Die Regeleinrichtung stellt dann die Kamera in Abhängigkeit von diesem aufbereiteten Messwert ein. Diese Art der Belichtungseinstellung der Kamera hat den Nachteil, dass die zu ermittelnden Bandkanten unterbelichtet werden. Deshalb ist es erforderlich, eine komplizierte, zusätzliche Einrichtung vorzusehen, um den Helligkeitssprung der Bandkanten festzustellen. Dabei wird zunächst in einem Lernvorgang der durch die Bandkanten bestimmte grösste Helligkeitssprung festgestellt. Dieser Wert wird in einem Spitzenwertspeicher gespeichert und mit dem grössten Helligkeitssprung bei der nächsten Messung verglichen. Nur dann, wenn erneut ein entsprechender Helligkeitssprung festgestellt wird, wird ein Triggerimpuls an einen Zähler gegeben, der dann einen Messwert für die Lage der Kante des Walzgutes liefert. Wenn jedoch bei der nächsten Messung kein gleich grosser Helligkeitssprung festgestellt wird, wird kein Triggerimpuls an den Zähler geliefert, so dass auch kein Messwert für die Breite erhalten wird. Wegen dieses sich unter Umständen immer wiederholenden Lernvorganges ist es nicht möglich, von der ersten Messung der Diodenzeilenkamera an Messwerte über die Lage der Bandkanten des Walzgutes zu erhalten. Dieser Nachteil ist besonders dann von grosser Bedeutung, wenn es gilt, die Kopfform des einlaufenden Walzgutes auszumessen. Wenn nämlich nicht von der Spitze des Kopfes an die Breite des Walzgutes festgestellt werden kann, ist es nicht möglich, beim Schopfen des Kopfes den Anteil des Schrotts möglichst klein zu halten.

Auch ist es bekannt, die Belichtungszeit einer selbstleuchtendes Walzgut erfassenden Dioden-Zeilenkamera dadurch einzustellen, dass der Amplituden-Ist-Wert der Video-Signale der Dioden-Zeilenkamera mit einem Amplituden-Soll-Wert verglichen und aus diesem Vergleichswert ein Stellsignal für die Belichtungszeit abgeleitet wird. Diese Art der Einstellung der Belichtungszeit erfolgt also nicht in unmittelbarer Abhängigkeit von der festgestellten Leichtkraft des selbstleuchtenden Walzgutes, sondern nach dem Kriterium, dass ein ausreichend grosser Amplitudenwert von der Dioden-Zeilenkamera geliefert wird (DE-A-2 920 531).

Bei einem bekannten Verfahren der eingangs genannten Art zum Schopfen des Kopfes von selbstleuchtendem Walzgut wird der Kopf mittels einer Fernsehkamera aufgenommen und auf einem Bildschirm abgebildet (JP-A-51-15580 und JP-A-55-120923). Das gespeicherte Bild wird entweder von einer Bedienungsperson oder von einem Rechner ausgewertet, wobei die Schnittlinie festgelegt wird. Mittels einer Steuereinrichtung, der ein Signal für den ankommenden Kopf und ein Signal über die Bandgeschwindigkeit zugeführt wird, wird ein Steuersignal für den Schnitt gegeben. Die Praxis mit solchen Verfahren hat gezeigt, dass der Einsatz einer Fernsehkamera nicht genügend exakte Werte über die Konturen des Kopfes liefert. Konstruktionsbedingt haben Fernsehkameras und Bildschirme erhebliche Abbildungsfehler (Nichtlinearität). Hinzu kommt, dass die kühleren Bandkanten in ihrer Eigenstrahlung schwach sind, so dass sie nicht immer sehr genau erfasst werden können. Man hat deshalb versucht, zusätzliche Beleuchtungsquellen vorzusehen.

Schliesslich erfolgt bei einem anderen, gattungsfremden Verfahren das Schopfen des Walzgutes automatisch in Abhängigkeit von der vorher gemessenen Bandbreite (DE-A-2 011 276). An zwei in festem Abstand voneinander angeordneten Orten wird kontinuierlich die Breite des durchlaufenden Walzgutes ausgemessen. Sobald die gleiche Breite an beiden Messorten festgestellt wird, wird ein Signal zur Einleitung des Schopfschnittes an die Schere gegeben. Ein solches Verfahren ist nicht optimal, aber auch nicht vollkommen sicher, denn je nach Kopfform ist es nicht erforderlich, für die Weiterverarbeitung den gesamten Kopf abzuschneiden. Es sind auch Kopfformen denkbar, bei denen an den vorgegebenen Messorten gleiche Breiten festgestellt werden, obwohl ein in diesem Bereich gelegter Schnitt nicht ausreicht, um einen für die Weiterverarbeitung geeigneten Walzgutanfang zu erhalten.

Der Erfindung liegt die Aufgabe zugrunde, ein Verfahren zu schaffen, bei dem in Abhängigkeit von der Kopfform der Schrottanteil möglichst gering gehalten wird.

Diese Aufgabe wird dadurch gelöst, dass mittels einer Dioden-Zeilenkamera die Kopfform durch wiederholte optische Abbildung des durchlaufenden Walzgutes entlang einer quer zur Laufrichtung des Walzgutes verlaufenden Messlinie ermittelt wird, wobei die Belichtungszeit der Dioden-Zeilenkamera in Abhängigkeit von der in Durchlaufrichtung des Walzgutes vor der Messlinie der Dioden-Zeilenkamera gemessenen Intensität der Strahlung des Walzgutes eingestellt wird, indem diese Einstellung im Sinne einer optimalen Belichtung der Walzgutkanten erfolgt.

Die Erfindung bezieht sich ferner auf eine Anlage zum Schopfen des Kopfes von selbstleuchtendem Walzgut, insbesondere Metallbändern, in einer Walzstrasse mit einer Schere und einer ihr zugeordneten, einen Rechner enthaltenden Steuereinrichtung, die von einer hinter dem letzten Vorwalzgerüst angeordneten, die Kopfform erfassenden Kamera Informationen über die Kopfform, von einem Geschwindigkeitsmesser ein Signal für die Geschwindigkeit des Walzgutes und von einer unmittelbar vor der Schere angeordneten Schranke ein Signal für den ankommenden Kopfanfang erhält, so dass der Rechner mit diesen Informationen die Entfernung der Schnittlinie vom Kopfanfang bestimmt und das Steuersignal für die Schere liefert.

Eine solche Anlage ist erfindungsgemäss dadurch gekennzeichnet, dass die Kamera als Dioden-Zeilenkamera mit quer zur Laufrichtung des Walzgutes verlaufender Messlinie ausgebildet ist, die an den Rechner Informationen über die Breite des Walzgutes liefert, und dass in Durchlaufrichtung des Walzgutes vor der Messlinie der hinter dem letzten Vorwalzgerüst angeordneten Dioden-Zeilenkamera ein Strahlungs-Intensitätsmesser zur Steuerung der Belichtungszeit der Dioden-Zeilenkamera, insbesondere ein Pyrometer, angeordnet ist.

Mit Hilfe des Rechners kann aus den ermittelten Messwerten die genaue Kopfform bestimmt und z.B. graphisch auf einem Sichtgerät abgebildet werden. Der Walzwerker ist dadurch in die Lage versetzt, zu entscheiden, an welcher Stelle der Schopf geschnitten werden soll. Die Auswertung der Messergebnisse kann aber auch vom Rechner übernommen werden, der dann die exakte Schnittlinie nach festgelegten Kriterien bestimmt. Solche Kriterien können z.B. das Erreichen eines festen Breitenwertes des Massgutes oder aber auch das Erreichen eines bestimmten prozentualen Teils der mittleren Bandbreite sein. Mit Hilfe des Rechners kann die Schere gesteuert werden. Dies kann beispielsweise dadurch geschehen, dass aus den gespeicherten Messwerten die Entfernung der Schnittlinie vom Bandanfang ermittelt und dieser Längenwert an die Steuerschaltung der vor dem Fertiggerät angeordneten Schere gegeben wird. Es versteht sich, dass die Schere mit einer vorgeschalteten exakten Längenmessvorrichtung gekoppelt sein muss.

Im Hinblick auf eine exakte Positionierung des Schopfschnittes sollte die Geschwindigkeit des Walzgutes sowohl während der Breitenmessung als auch beim Einlauf in die Schere gemessen werden. Daher werden an diesen beiden Orten Geschwindigkeitsmessungen am Band vorgenommen. Dies kann mit üblichen Messgeräten, aber auch mittels zusätzlich angeordneter Diodenzeilenkameras vorgenommen werden. Ausserdem ist es erforderlich, den Kopfanfang vor der Schere zu erfassen. Vorzugsweise wird dafür eine Diodenzeilenkamera mit quer über die Breite des Bandes verlaufender Messlinie verwendet. In dieser Anordnung hat die Diodenzeilenkamera den Vorteil, dass in jedem Fall der einlaufende Kopf erfasst wird, da die Kamera die gesamte Rollgangsbreite abbildet.

Die Breitenmessung des Warmbandes, die in unmittelbarer Nähe des letzten Vorwalzgerüstes erfolgt, hat den Vorteil, dass Fehlmessungen weitgehend ausgeschlossen werden, weil in diesem Bereich die Zunderbildung auf dem Walzgut noch gering ist und ferner die Verunreinigung der Walzgutoberfläche durch verspritztes Wasser ausgeschlossen werden kann, da eine Kühlung des Walzgutes erst zum späteren Zeitpunkt erfolgt.

Aufgrund der Berücksichtigung der Strahlungsintensität bei der Einstellung der Belichtungszeit ist gewährleistet, dass in einem grossen Temperaturbereich eine exakte Breitenmessung vom ersten Augenblick an genau durchgeführt werden kann. Da die Messung der Strahlungsintensität nicht erst in dem Augenblick erfolgt, wenn die Breite gemessen wird, sondern zeitlich und örtlich früher, und da ferner nicht von einem maximalen Helligkeitswert, sondern von einem Signal ausgegangen wird, das zu der Strahlungsintensität des Bandes in einer bestimmten Beziehung steht, ist gewährleistet, dass im Augenblick der Breitenmessung die Belichtungssteuerung der Dioden-Zeilenkamera optimal ist, d.h. dass es weder zu einer Überbelichtung, noch Unterbelichtung der Bandkante kommt. Es versteht sich, dass unter Berücksichtigung der Durchlaufgeschwindigkeit des Walzgutes die Messung der Strahlungsintensität in einem ausreichend grossen Abstand von der Messlinie der Diodenzeilenkamera zu erfolgen hat und die Laufzeit des Walzgutes vom Messort der Strahlungsintensität bis zur Messlinie der Kamera bei der Belichtungseinstellung zu berücksichtigen ist, weil anderenfalls die Stelle des Walzgutes, deren Strahlungsintensität gemessen worden ist, die Diodenzeilenkamera bereits durchlaufen hat oder noch nicht durchlaufen hat, wenn die Belichtungseinstellung entsprechend dem Messergebnis des Strahlungsintensitätsmessers gesteuert worden ist. Die Steuerung der Belichtungszeit erfolgt über die Einstellung der Abtastfrequenz der Diodenzeilenkamera. Bei der optimalen Belichtungseinstellung für die Bandkanten wird in Kauf genommen, dass andere, nicht interessierende Bereiche, insbesondere die Bandmitte, nicht optimal belichtet werden.

Vorzugsweise erfolgt die Messung der Strahlungsintensität auf einem kurzen Abschnitt der Walzgutbreite. Dieser Messabschnitt kann an jeder Stelle des Walzgutes liegen. Sofern er ausserhalb des Bereiches der Walzgutkanten, insbesondere in der Walzgutmitte liegt, muss die Belichtungszeit der Diodenzeilenkamera korrigiert werden, um wieder zu einer optimalen Belichtung der Bandkanten zu kommen. Es wurde nämlich gefunden, dass wegen der physikalischen Eigenschaften des Halbleitermaterials der Dioden der Diodenzeilenkamera eine Verminderung der Temperatur des Walzgutes um ca. 50°K zu einer Verminderung der an den Dioden messbaren Spannung um 50% führt. Da in der Praxis die Bandränder in der Regel 10 bis 50°K kälter als die Bandmitte sind, ist die Einstellung der optimalen Belichtungszeit der Diodenzeilenkamera in bezug auf die gerade zu erfassenden Bandkanten möglich, wenn die sich durch die Messung der Strahlungsintensität in der Walzgutmitte ergebende Belichtungszeit mit einem empirisch ermittelten Faktor korrigiert wird.

Die Messung der Strahlungsintensität in der Walzgutmitte ist deshalb von Vorteil, weil in diesem Bereich auch bei Änderungen der Walzgutbreite (z.B. Formatwechsel) in jedem Fall Walzgut vorhanden ist, dessen Strahlung gemessen werden kann.

Glühendes Walzgut sendet bekanntlich Strahlung in einem breiten Wellenlängenbereich aus, wobei deren Intensität in Abhängigkeit von der jeweiligen Wellenlänge der Strahlung recht unterschiedlich sein kann. Damit es insbesondere im Bereich der Kanten des Walzgutes nicht zu Fehlbelichtungen der Diodenzeilenkamera kommt, sollte die Strahlungsintensitätsmessung im gleichen Wellenlängenbereich vorgenommen werden, in dem die Diodenzeilenkamera ihre grösste Empfindlichkeit besitzt. Eine Begrenzung des für die Intensitätsmessung der Strahlung verwendeten Wellenlängenbereiches kann dadurch vorgenommen werden, dass vor das Messgerät entsprechende Filter geschaltet werden oder aber, dass die für die Intensitätsmessung der Strahlung verwendete Halbleiterschicht des beispielsweise als Pyrometer ausgebildeten Messgerätes aus dem gleichen Material hergestellt ist wie die lichtempfindliche Schicht der Dioden der Diodenzeilenkamera.

Vorzugsweise erfolgt die Messung der Strahlungsintensität mit einem separaten, in Durchlaufrichtung des Walzgutes vor der Kamera angeordneten Strahlungsintensitätsmesser.

Nach einer weiteren Ausgestaltung der Erfindung ist es möglich, auch bei unterschiedlichen Durchlaufgeschwindigkeiten des Walzgutes die Breitenmessung des Walzgutes in festgelegten Abständen durchzuführen. In diesem Fall ist vorgesehen, dass die Abtastfrequenz der Diodenzeilenkamera in Abhängigkeit von der Durchlaufgeschwindigkeit eingestellt wird, wobei die optimale Belichtung der Walzgutkanten durch Anpassung der zu den Dioden der Kamera durchgelassenen Strahlung, z.B. durch Einsetzen von Blenden oder Filtern, aufrechterhalten wird.

Vorzugsweise wird die Kopfform des Walzgutes dadurch ermittelt, dass die Abtastfrequenz der Diodenzeilenkamera derart eingestellt wird, dass die Walzgutbreite in bestimmten Abständen gemessen wird, und dass die Messungen so lange wiederholt werden, bis bei einer vorgegebenen Anzahl von aufeinanderfolgenden Messungen die gleichen Messwerte erhalten werden. Darüber hinaus kann vorgesehen sein, dass dann, wenn bei der Auswertung aufeinanderfolgender Messungen keine allzu grossen Abweichungen in der Breite festgestellt werden sollten, nicht jede der aufeinanderfolgenden Messungen der einzelnen Zeilendurchläufe der Diodenzeilenkamera ausgewertet wird. Gilt es, die Form des Kopfes genau auszumessen, sollten die ausgewerteten Messungen in Abständen zwischen 5 und 20 mm auf dem Walzgut entsprechen.

Das erfindungsgemässe Verfahren wird im folgenden anhand der Figuren beispielsweise erläutert.

Es zeigt:

Fig. 1 verschiedene Kopfformen von Warmband,

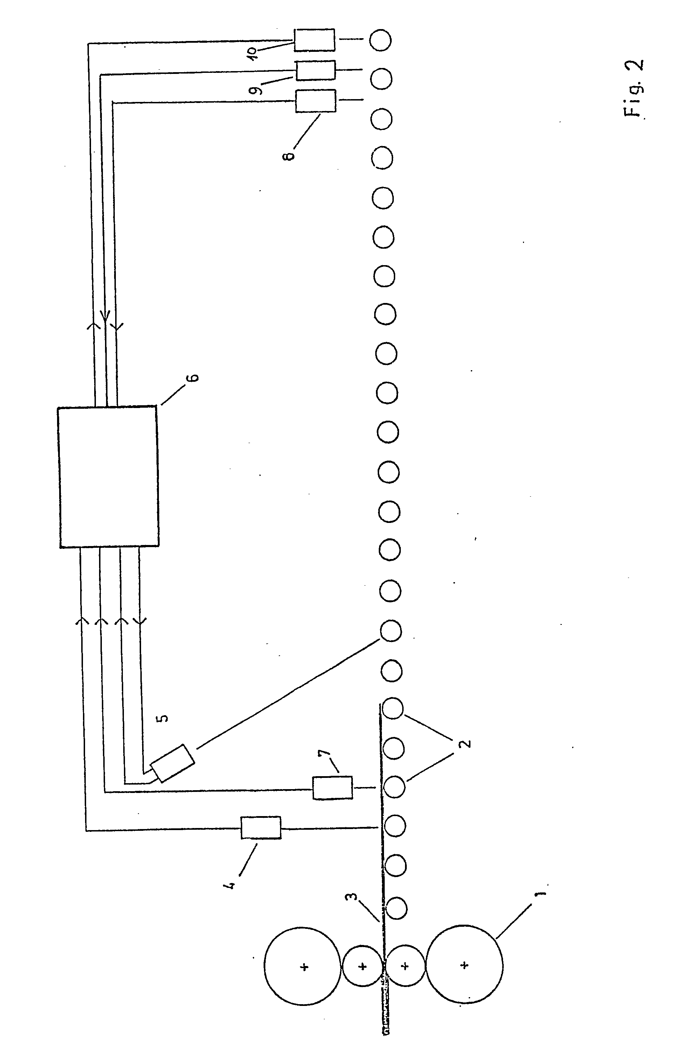

Fig. 2 eine schematische Darstellung einer in einer Walzstrasse eingebauten Anlage zum Schopfen von Warmband.

Das aus einem Vorwalzgerüst 1 auf einen Rollgang 2 gelangende Walzgut 3 wird von einem Pyrometer 4 in der Mitte hinsichtlich der Strahlungsintensität ausgemessen. Entsprechend diesem Messergebnis wird die Belichtungszeit einer Diodenzeilenkamera 5 eingestellt. Die Messlinie der Diodenzeilenkamera 5 ist vom Messort des Pyrometers 4 so weit entfernt, dass die Einstellung der Belichtungszeit abgeschlossen ist, bevor die Spitze des Walzgutes 3 die Messlinie erreicht hat. Das Pyrometer 4 und die Diodenzeilenkamera 5 sind Teile einer Steuereinrichtung 6, die auch von einem Geschwindigkeitsmesser 7, der in Durchlaufrichtung des Walzgutes 3 der Messlinie der Diodenzeilenkamera vorgeordnet ist, beaufschlagt wird. Wird die Abtastfrequenz der Diodenzeilenkamera 5 unter Berücksichtigung der Geschwindigkeit des Walzgutes 3 eingestellt, können in bestimmten räumlichen Abständen auf dem Walzgut 3 Messungen durchgeführt werden. Die Steuereinrichtung 6 wird verwendet, um eine Schere 10 zum Schopfen des Walzgutes 3 zu steuern. Damit in Abhängigkeit von der ausgemessenen Kopfform der Kopf in einer bestimmten Länge geschopft werden kann, ist es erforderlich, die Geschwindigkeit des Kopfes beim Einlauf in die Schere 10 mittels eines Geschwindigkeitsmessers 8, und den Einlauf des Kopfanfanges mittels einer Schranke, insbesondere einer Diodenzeilenkamera 9, mit quer über die Walzgutbreite verlaufender Messlinie festzustellen.

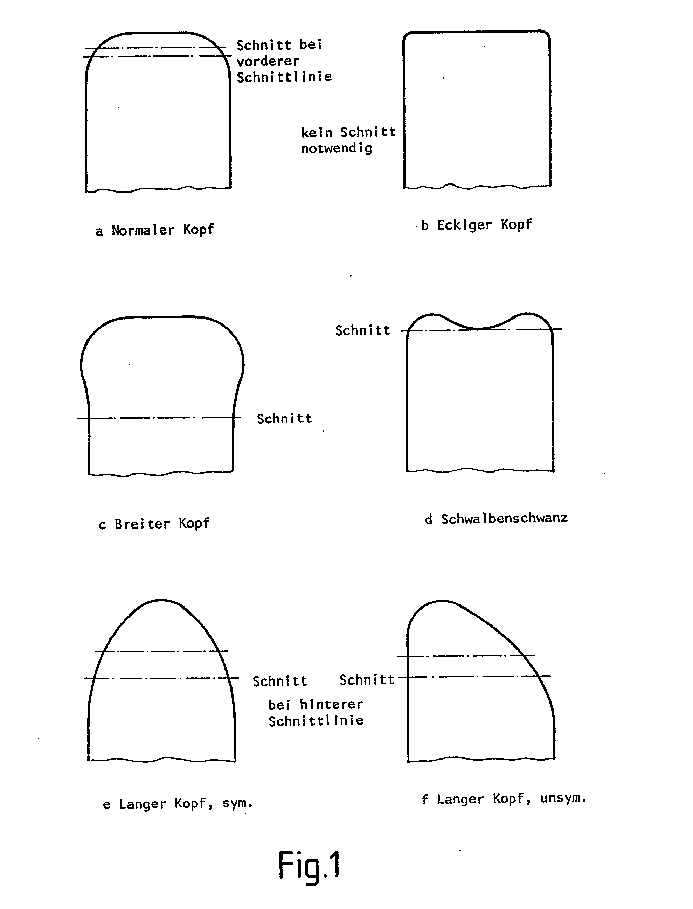

In Fig. 1 sind verschiedene Kopfformen dargestellt, die mit dem erfindungsgemässen Messverfahren festgestellt worden sind. In Abhängigkeit von diesen Kopfformen werden die Schnitte festgelegt, die in der Zeichnung strichpunktiert angedeutet sind.

**Patentansprüche**

1. Verfahren zum Schopfen des Kopfes von selbstleuchtendem Walzgut, bei dem die Kopfform unmittelbar hinter dem letzten Vorwalzgerüst mittels einer Kamera erfasst wird und in Abhängigkeit von der Kopfform die Entfernung der Schnittlinie vom Kopfanfang bestimmt wird, und bei dem unmittelbar vor der Schere der Kopfanfang erfasst wird und aus der Entfernung des Abstandes der Schnittlinie vom Kopfanfang, der Durchlaufgeschwindigkeit des Walzgutes vor der Schere und dem Signal für den ankommenden Kopfanfang ein an die Schere zu übertragendes Steuersignal gebildet wird, dadurch gekennzeichnet, dass mittels einer Dioden-Zeilenkamera die Kopfform durch wiederholte optische Abbildung des durchlaufenden Walzgutes entlang einer quer zur Laufrichtung des Walzgutes verlaufenden Messlinie ermittelt wird, wobei die Belichtungszeit der Dioden-Zeilenkamera in Abhängigkeit von der in Durchlaufrichtung des Walzgutes vor der Messlinie der Dioden-Zeilenkamera gemessenen Intensität der Strahlung des Walzgutes eingestellt wird, indem diese Einstellung im Sinne einer optimalen Belichtung der Walzgutkanten erfolgt.

2. Verfahren nach Anspruch 1, dadurch gekennzeichnet, dass die Messungen der Strahlungsintensität auf einem kurzen Abschnitt der Walzgutbreite erfolgt.

3. Verfahren nach Anspruch 2, dadurch gekennzeichnet, dass der kurze Messabschnitt ausserhalb der Walzgutkante, insbesondere in der Walzgutmitte, liegt und die Belichtungszeit durch einen empirisch ermittelten Faktor korrigiert wird.

4. Verfahren nach einem der Ansprüche 1 bis 3, dadurch gekennzeichnet, dass die Messung der Strahlungsintensität in demjenigen Wellenlängenbereich erfolgt, in dem die Dioden-Zeilenkamera ihre grösste Empfindlichkeit besitzt.

5. Verfahren nach einem der Ansprüche 1 bis 4, dadurch gekennzeichnet, dass die Abtastfrequenz der Dioden-Zeilenkamera in Abhängigkeit von der Durchlaufgeschwindigkeit des Walzgutes eingestellt wird, wobei die optimale Belichtung der Walzgutkante durch Anpassung der zu den Dioden der Dioden-Zeilenkamera durchgelassenen Strahlung aufrechterhalten wird.

6. Verfahren nach einem der Ansprüche 1 bis 5, dadurch gekennzeichnet, dass als Fühler für die Ermittlung des Kopfanfanges eine Dioden-Zeilenkamera mit quer über die Breite des Bandes verlaufender Messkennlinie verwendet wird.

7. Verfahren nach einem der Ansprüche 1 bis 6, dadurch gekennzeichnet, dass für die Messung der Kopfform die Abtastfrequenz der Dioden-Zeilenkamera derart eingestellt wird, dass die Walzgutbreite in Abständen von 5 bis 20 mm gemessen wird, und dass die Messungen so lange wiederholt werden, bis bei einer vorgegebenen Anzahl von aufeinanderfolgenden Messungen die gleichen Messwerte erhalten werden.

8. Anlage zum Schopfen des Kopfes von selbstleuchtendem Walzgut, insbesondere Metallbändern, in einer Walzstrasse mit einer Schere und einer ihr zugeordneten, einen Rechner enthaltenden Steuereinrichtung, die von einer hinter dem letzten Vorwalzgerüst angeordneten, die Kopfform erfassenden Kamera Informationen über die Kopfform, vom einem Geschwindigkeitsmesser ein Signal für die Geschwindigkeit des Walzgutes und von einer unmittelbar vor der Schere angeordneten Schranke ein Signal für den ankommenden Kopfanfang erhält, so dass der Rechner mit diesen Informationen die Entfernung der Schnittlinie vom Kopfanfang bestimmt und das Steuersignal für die Schere liefert, dadurch gekennzeichnet, dass die Kamera (5) als Dioden-Zeilenkamera mit quer zur Laufrichtung des Walzgutes verlaufender Messlinie ausgebildet ist, die an den Rechner Informationen über die Breite des Walzgutes (3) liefert, und dass in Durchlaufrichtung des Walzgutes (3) vor der Messlinie der hinter dem letzten Vorwalzgerüst (1) angeordneten Dioden-Zeilenkamera (5) ein Strahlungs-Intensitätsmesser (4) zur Steuerung der Belichtungszeit der Dioden-Zeilenkamera (5), insbesondere ein Pyrometer, angeordnet ist.

9. Anlage nach Anspruch 8, dadurch gekennzeichnet, dass die vor der Schere (10) angeordnete Schranke (9) eine weitere Dioden-Zeilenkamera mit quer über die Breite des Walzgutes verlaufender Messlinie ist.

## Claims

1. Process for cropping the head portion of self-illuminating rolled stock, in which the shape of the head portion is seized immediately behind the last roughing roll stand by means of a camera and in which the distance of the cutting line relative to the beginning of the head portion is determined depending on the shape of the head portion, and in which immediately in front of the shears the beginning of the head portion is seized and in which is formed from the distance of the cutting line from the beginning of the head portion, the conveying speed of the rolled stock in front of the shears and the signal for the arriving head portion a control signal to be transmitted to the shears, characterized in that there is determined by means of a diode line camera the shape of the head portion by repeated optical representation of the passing rolled stock along a measuring line extending transverse to the passing direction of the rolled stock, wherein the exposure time of the diode line camera is adjusted depending on the intensity of radiation of the rolled stock measured in passing direction of the rolled stock in front of the measuring line of the diode line camera, said adjustment being performed in the sense of an optimum exposure of the rolled stock edges.

2. Process as defined in claim 1, characterized in that the measurement of the radiation intensity is performed on a short section of the rolled stock width.

3. Process as defined in claim 2, characterized in that the short measuring section is located outside the rolled stock edge, in particular in the center of the rolled stock, and that the exposure time is corrected by an empirically determined factor.

4. Process as defined in either of claims 1 to 3, characterized in that the measurement of the radiation intensity is performed in the wave length area in which the diode line camera possesses its highest sensitivity.

5. Process as defined in either of claims 1 to 4, characterized in that the scanning frequency of the diode line camera is adjusted depending on the passing speed of the rolled stock, whereby optimum exposure of the rolled stock edge is maintained by adaption of the radiation passing to the diodes of the diode line camera.

6. Process as defined in either of claims 1 to 5, characterized in that as feeler for the detection of the beginning of the head portion there is used a diode line camera with a measuring characteristic line extending transverse over the width of the conveyor.

7. Process as defined in either of claims 1 to 6, characterized in that for measuring the shape of the head portion the scanning frequency of the diode line camera is adjusted such that the width of the rolled stock is measured in distances of 5 to 20 mm, and that the measurements are repeated until for a predetermined number of successive measurements there are obtained the same measuring values.

8. Installation for cropping the head portion of self-illuminating rolled stock, in particular metallic ribbons, in a rolling mill comprising shears and a correlated a computer containing control device receiving informations from a camera located behind the last roll stand and seizing the shape of the head portion, and receiving from a speed meter a signal for the speed of the rolled stock, and from a barrier located immediately in front of the shears a signal for the arriving head portion shape, so that the computer determines with these informations the distance of the cutting line to the beginning of the head portion and supplies the control signal for the shears, characterized in that camera (5) is designed as diode line camera with a measuring line extending transverse to the conveying direction of the rolled stock, and which supplies to the computer informations concerning the width of rolled stock (3), and that in passing direction of rolled stock (3) in front of the measuring line of diode line camera (5) located behind the last roll stand (1) is arranged a radiation intensity meter (4), in particular a pyrometer, for controlling the exposure time.

9. Installation as defined in claim 8, characterized in that barrier (9) located in front of shears (10) is a further diode line camera with a measuring line extending transverse over the width of the rolled stock.

## Revendications

1. Procédé pour ébouter la tête de matières laminées autolumineuses, dans lequel la forme de tête est détectée immédiatement derrière la dernière cage dégrossisseuse au moyen d'une caméra et l'écartement de la ligne de coupe à la forme de tête est déterminée en fonction de la forme de tête, et dans lequel le début de tête est saisi immédiatement avant la cisaille et un signal de commande à transmettre à la cisaille est formé à partir de l'écartement de la distance de la ligne de coupe au début de tête, de la vitesse de défilement des matières laminées devant la cisaille et du signal pour le début de tête arrivante, caractérisé par le fait que la forme de tête est déterminée au moyen d'une caméra à lignes à diodes par représentation optique répétée des matières laminées défilantes le long d'une ligne de mesure s'étendant transversalement à la direction de déplacement des matières laminées, le temps de pose de la caméra à lignes à diodes étant réglé en fonction de l'intensité de rayonnement des matières laminées mesurée en direction de défilement des matières laminées avant la ligne de mesure de la caméra à lignes à diodes.

2. Procédé selon la revendication 1, caractérisé par le fait que les mesures de l'intensité de rayonnement sont effectuées sur une courte section de la largeur des matières laminées.

3. Procédé selon la revendication 2, caractérisé par le fait que la section de mesure courte se trouve en dehors du bord des matières laminées, en particulier au milieu des matières laminées, et le temps de pose est corrigé par un facteur déterminé empiriquement.

4. Procédé selon l'une des revendications 1 à 3, caractérisé par le fait que la mesure de l'intensité de rayonnement est effectuée dans la gamme de longueurs d'onde dans laquelle la camera à lignes à diodes a sa plus grande sensibilité.

5. Procédé selon l'une des revendications 1 à 4, caractérisé par le fait que la fréquence de balayage de la caméra à lignes à diodes est réglée en fonction de la vitesse de défilement des matières laminées, l'exposition optimale du bord des matières laminées étant maintenue par adaptation du rayonnement transmis aux diodes de la caméra à lignes à diodes.

6. Procédé selon l'une des revendications 1 à 5, caractérisé par le fait qu'on utilise comme capteur pour déterminer le début de tête une caméra à lignes à diodes avec une ligne caractéristique de mesure s'étendant transversalement sur la largeur de la bande.

7. Procédé selon l'une des revendications 1 à 6, caractérisé par le fait que la fréquence de balayage de la caméra à lignes à diodes est réglée, pour mesurer la forme de tête, de manière que la largeur des matières laminées est mesurée à des distances de 5 à 20 mm, et que les mesures sont répétées jusqu'à ce qu'on obtienne les mêmes valeurs mesurées pour un nombre prédéterminé de mesures successives.

8. Installation pour l'éboutage de la tête de matières laminées autolumineuses, en particulier des bandes métalliques, dans un train de laminage avec une cisaille et un dispositif de commande qui lui est adjoint et comprenant un calculateur, qui reçoit des informations sur la forme de tête depuis une caméra détectant la forme de tête et disposée derrière la dernière cage dégrossisseuse, un signal pour la vitesse des matières laminées depuis un capteur de vitesse et un signal pour le déput de tête arrivant depuis une limite disposée immédiatement avant la cisaille, de sorte que le calculateur détermine avec ces informations l'éloignement de la ligne de coupe d'avec le début de tête et délivre le signal de commande pour la cisaille, caractérisé par le fait que la caméra (5) est une caméra à lignes à diodes avec une ligne de mesure s'étendant transversalement à la direction de défilement des matières laminées, qui délivre au calculateur des informations sur la largeur des matières laminées (3) et qu'un capteur d'intensité de rayonnement (4), en particulier un pyromètre, est disposé dans la direction de défilement des matières laminées (3) avant la ligne de mesure de la caméra à lignes à diodes (5) disposée derrière la dernière cage dégrossisseuse pour commander le temps de pose de la caméra à lignes à diodes (5).

9. Installation selon la revendication 8, caractérisé par le fait que la limite (9) disposée avant la cisaille (10) est une autre caméra à lignes à diodes avec une ligne de mesure s'étendant transversalement sur la largeur des matières laminées.

Schnitt bei
vorderer
Schnittlinie

kein Schnitt
notwendig

a Normaler Kopf

b Eckiger Kopf

Schnitt

c Breiter Kopf

Schnitt

d Schwalbenschwanz

Schnitt

Schnitt
bei hinterer
Schnittlinie

e Langer Kopf, sym.

f Langer Kopf, unsym.

# Fig.1

0 084 646

Fig. 2